# EUROPEAN PATENT SPECIFICATION

(11) **EP 3 174 695 B1**
(45) Date of publication and mention of the grant of the patent: **02.09.2020**
(21) Application number: 15744480.3
(22) Date of filing: 29.07.2015
(51) Int. Cl.: B29C 70/34, B29C 70/72, B29C 70/76, B29D 99/00, B32B 3/08, F03D 1/06, B29L 31/08

(54) **COMPOSITE COMPONENT HAVING A SAFETY EDGE AND PROCESS FOR MAKING SAME**
VERBUNDKOMPONENTE MIT SICHERHEITSKANTE UND HERSTELLUNGSVERFAHREN
ÉLÉMENT COMPOSITE À BORD DE SÉCURITÉ ET PROCÉDÉ DE FABRICATION

(30) Priority: 31.07.2014 GB 201413551
(43) Date of publication of application: 07.06.2017
(73) Proprietor: Vestas Wind Systems A/S, 8200 Aarhus N (DK)
(72) Inventor: SANDERCOCK, Stephen, Ryde PO33 1LG (GB); WARDROPPER, Steve, New Milton Hampshire BH25 7AB (GB)
(74) Representative: Vestas Patents Department
(86) International application number: PCT/DK2015/050229
(87) International publication number: WO 2016/015735

(56) References cited:
- EP-A1- 2 716 904

## Description

### Field of the invention

The invention relates to composite components having a safety edge to facilitate handling, and to methods of manufacturing such components. The invention has particular application to composite components used in the manufacture of wind turbine blades.

### Background to the invention

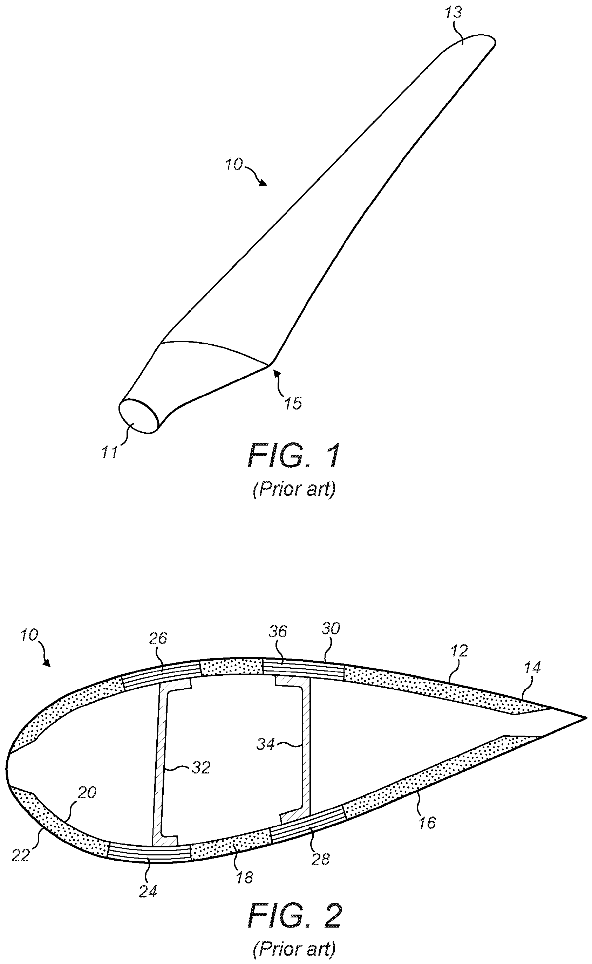

Figure 1 illustrates in perspective view a prior art wind turbine blade 10. The wind turbine blade 10 extends longitudinally from a generally cylindrical root 11 to a tip 13. In use, the root end 11 of the blade 10 is attached to a hub of a wind turbine (not shown). In cross-section, the blade 10 transitions from a circular profile at the root 11 to an airfoil profile at the widest part of the blade 10, which is known as the 'shoulder' 15. Between the shoulder 15 and the tip 13, the blade has an airfoil profile that steadily decreases in thickness and chord moving towards the tip 13.

Figure 2 illustrates the blade 10 in cross-section and reveals that the blade 10 comprises an outer shell 12, which is fabricated from two half shells: a leeward shell 14 and a windward shell 16. The shells 14, 16 are moulded from glass-fibre reinforced plastic (GRP). Parts of the outer shell 12 are of sandwich panel construction and comprise a core 18 of lightweight foam (e.g. polyurethane), which is sandwiched between inner and outer GRP layers 20, 22 or 'skins'.

The blade 10 comprises first and second pairs of spar caps 24, 26, 28, 30 arranged between sandwich panel regions of the outer shell 12. One spar cap of each pair 24, 28 is integrated with the windward shell 16 and the other spar cap of each pair 26, 30 is integrated with the leeward shell 14. The spar caps 24, 26, 28, 30 of the respective pairs are mutually opposed and extend longitudinally along the length of the blade 10. A first longitudinally-extending shear web 32 bridges the first pair of spar caps 24, 26 and a second longitudinally-extending shear web 34 bridges the second pair of spar caps 28, 30. The shear webs 32, 34 in combination with the spar caps 24, 26, 28, 30 form a pair of I-beam structures, which transfer loads effectively from the rotating blade 10 to the hub of the wind turbine (not shown). The spar caps 24, 26, 28, 30 in particular transfer tensile and compressive bending loads, whilst the shear webs 32, 34 transfer shear stresses in the blade 10.

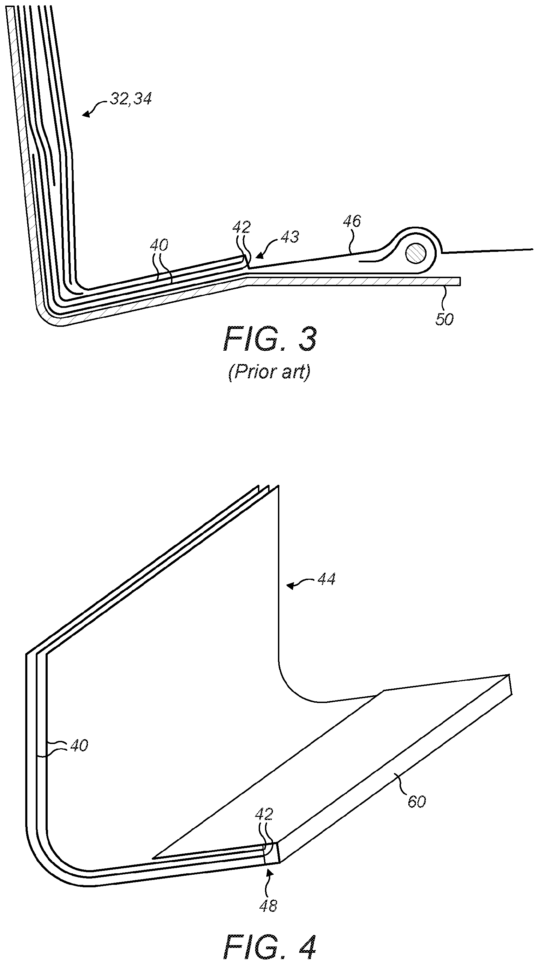

The shear webs 32, 34 are made in a vacuum-assisted resin transfer moulding process (VARTM). The process is illustrated in Figure 3, which shows only a bottom part of the web. Layers of glass fibre fabric 40 are laid up on the surface of a mould tool 50. Edges 42 of the layers are aligned to define an edge 43 of the shear web 32, 34. The layers 40 are enclosed by a vacuum bag 46 to define a sealed area around the layers 40. Air is then removed from the bag 46 by a vacuum pump, and resin is introduced into the bag 46. The resin infuses between and into the glass fibre layers 40. The mould tool 50 is then heated to cure the resin, and once the resin is cured, the component is demoulded.

The resulting shear web 32, 34 has an edge 43 that is defined by the aligned edges 42 of the glass fibre layers 40 and the cured resin in the region of those edges 42. It is difficult to align the edges 42 accurately when the layers 40 are laid on the mould tool 50, and so the edge 43 tends to be uneven. Furthermore, uneven amounts of excess resin tend to be present at the edge 43 of the shear web 32, 34 after the resin infusion. The result is that after the resin has been cured, the edge 43 of the shear web 32, 34 tends to be rough, with the hard cured resin at the edge 43 forming serrations. The rough edge 43 may therefore present a safety hazard making the shear web 32, 34 difficult and potentially unsafe to handle.

The potentially hazardous rough edge 43 can be removed post-fabrication by trimming the edge of the component. However, the cured resin is very hard, and a diamond cutting saw is required to cut through the component to trim the edge, making the trimming an expensive and time-consuming process.

The edge 43 can be neatened prior to the curing process by folding over edges of the glass fibre layers 40 when they are laid in the mould tool 50; however this only partially mitigates the problem, and in practice trimming is still required post-fabrication. The edge 43 can also be neatened by providing the mould tool with an abutment piece in the form of a metal bar or strip, and laying the glass fibre layers 40 against the abutment piece. When the component is de-moulded, the resulting edge is neater. However, even in this case the roughness remain to some extent, and the act of de-moulding the component still tends to leave fractured regions of resin that present sharp and hazardous edges.

EP2716904A1 discloses a spar cap for a wind turbine blade comprising a fiber-reinforced member and edge members integrated with the sides of the fiber-reinforced member. The edge members may be made from the same material that is used to manufacture the core of the rotor blade. If the edges of the spar cap require some adaption, the grinding or surface finish treatment is easier compared to grinding of the sharp edges of the fiber-reinforced member.

### Summary of the invention

Against this background, the invention resides in a method of making a composite component for a wind turbine blade, the composite component having a safety edge, and the method comprising: arranging one or more fibrous layers in a mould such that the layers define a laminate edge; arranging an edging adjacent to the laminate edge; integrating the fibrous layers and the edging by means of resin; substantially preventing the resin from permeating into the edging; and removing a portion of the edging to reveal a substantially resin-free exposed surface of the edging that defines a safety edge of the component, characterised in that he step of removing a portion of the edging comprises severing the edging along a severance line spaced apart from the laminate edge, and removing a sacrificial portion of the edging outboard of the severance line such that a shield portion of the edging inboard of the severance line remains integrated with the laminate and includes the substantially resin-free exposed surface defining the safety edge of the component.

Severing the edging at the severance line provides a particularly simple method of removing part of the edging. The severing process can be carried out by hand, for example using a hand-held cutting tool, or the severing process could be mechanised.

The method of the invention provides a simple and efficient means for providing a hand-safe edge on a composite component for a wind turbine blade, without the need for lengthy and expensive processing after the component has been fabricated. The edging is integrated into the component during fabrication, and the substantially resin-free exposed surface of the edging is easily provided by removing a portion of the edging. Because resin has not been allowed to permeate into the edging, the core of the edging is free from hardened resin, and a portion of the edging can therefore be removed quickly and easily, without the need for elaborate tools.

The edging may be made from substantially resin impermeable material such that the resin is substantially prevented from permeating into the edging. Using substantially resin impermeable material is particularly advantageous as it means that no additional measures are necessary to prevent resin permeating into the edging.

The method may further comprise arranging a plurality of fibrous layers, one on top of the other, in the mould to form the laminate.

The method may comprise removably fixing the edging to the mould. In this way, the edging can be fixed in place to define a secure border, and the fibrous layer(s) can be securely placed up against the edging as they are laid without moving the edging out of its correct position. Furthermore, removably fixing the edging to the mould means that the edging is not moved away from its correct position when a vacuum is applied, or during the resin infusion or curing process. When the forming process is complete, the edging can be unfixed from the mould as the component is de-moulded.

The method may comprise arranging a peel ply layer on the mould, and arranging the fibrous layers and the edging over the peel ply layer. In this way, in the finished component, a peel ply layer is provided on the undersurface of the component and extends over both the fibrous layers and the edging. The peel ply layer can subsequently be removed to provide a roughened surface on both the fibrous layers and the edging.

Additionally or alternatively, the method may comprise arranging a peel ply layer over the fibrous layers and the edging, so as to provide a peel ply layer on the upper surface of the component that extends over both the fibrous layers and the edging.

An initial thickness of the edging may be equal to or greater than an initial combined thickness of the fibrous layer(s), and the method may further comprise compressing the fibrous layer(s) and the edging during a vacuum-assisted moulding process such that the edging has a final thickness that is substantially the same as a final combined thickness of the fibrous layer(s). In this way, both the fibrous layers and the edging may be compressed to substantially the same thickness, so as to provide a continuous upper surface across the fibrous layers and to the edging.

The method may further comprise supplying liquid resin to the mould. Alternatively or additionally, the fibrous layers may be pre-impregnated with resin. The method may further comprise integrating the fibrous layers and the edging by curing the resin.

The invention extends to a composite component comprising a shear web made according to the method of the invention described above. The invention also extends to a wind turbine blade comprising the shear web.

A composite component comprising a shear web according to the present invention comprises a laminate formed from one or more fibrous layers and a resin, the laminate having a laminate edge defined by an edge of the one or more fibrous layers and an edging located adjacent to the laminate edge and integrated with the laminate by the resin. The edging has a substantially resin-free exposed surface that defines a safety edge of the composite component.

The edging acts as a buffer that shields the edges of the fibrous layer(s) which would otherwise form sharp, serrated edges. In this way, the edge of the laminate component that is the substantially resin-free exposed surface of the edging, rather than serrated edges of the fibrous layers.

Because the exposed surface of the edging is substantially resin-free, the exposed surface is free from excess resin that would otherwise form uneven, sharp edges and pose a safety hazard to those handling the composite component. Thus, the substantial absence of hard resin from the edge of the component provides a hand-safe edge that makes the component relatively safe to handle.

Therefore, by means of the substantially resin-free exposed surface of the edging, the invention provides a hand-safe edge on a composite component for a wind turbine blade, without the need for lengthy and expensive processing after the component has been fabricated.

The edging may be made from substantially resin impermeable material. In this way, the inside core of the edging is kept substantially free from cured resin during fabrication of the component, making the edging relatively easy to cut to reveal the exposed surface. For example, the edging may comprise foam, balsa and/or polystyrene, and/or may be made from a closed-cell foam to avoid resin permeation.

The edging may be in the form of a strip. In this way, the edging can extend along a length of the edge of the component, and can bend to accommodate the shape of the edge. If necessary, multiple strips can be placed end-to-end to cover the full length of the edge.

The edging may be made from a compressible material. This is particularly beneficial when a vacuum stage is involved in the composite-forming process. When the fibrous layers of the composite component are placed under vacuum they are compressed. The compressibility of the edging means that the edging is also compressed when a vacuum is applied, so as to match the compression of the laminate layers, thereby providing a continuous surface across the laminate and the edging.

In embodiments where the edging is made from a compressible material, in the finished composite component the edging may be in a compressed state.

The composite component may comprise a peel ply layer arranged over the laminate and the edging. The peel ply layer may be removed to reveal a roughened surface on both the laminate and the edging, to facilitate bonding of both the laminate and the edging to another surface.

The safety edge of the composite component may be formed by severing the edging along a severance line and removing a sacrificial portion of the edging outboard of the severance line to reveal the substantially resin-free exposed surface of the edging. In this way, the substantially resin-free exposed surface can be formed quickly and easily, without the need for elaborate tools.

The component may be formed by means of VARTM.

The invention also extends to a wind turbine blade comprising a shear web according to the invention described above.

For the avoidance of doubt, the term 'laminate' as used herein is intended to encompass parts made up from one or more layers, and hence includes parts made from a single layer within its scope.

### Brief description of the drawings

Figures 1 and 2 which illustrate a wind turbine blade in perspective and cross-sectional views respectively, and Figure 3 which illustrates a method of making a shear web, have already been described above by way of background to the present invention. In order that the invention may be more readily understood, specific embodiments of the invention will now be described, by way of non-limiting example only, with reference to the following figures in which:
Figure 4 is a schematic partial perspective view of a composite component according to an embodiment of the invention;
Figures 5A to 5I illustrate stages in a method of making the composite component of Figure 4;
Figures 6A and 6B are a perspective view and partial enlarged cross-sectional view respectively of a composite component made by the method of Figures 5A to 5I; and
Figure 7 is a cross-sectional view of a wind turbine blade incorporating the composite component of Figure 6.

### Detailed description of embodiments of the invention

Figure 4 illustrates a composite component 130 for a wind turbine blade. In this example, the composite component 130 is a shear web, and Figure 4 illustrates the bottom part of the shear web only. The shear web 130 comprises a laminate 44 formed by a plurality of laminate layers 40, for example glass-fibre fabric layers, which are integrated together by cured resin. Edges 42 of the laminate layers 40 define a laminate edge 48. A strip of foam 60 extends alongside the laminate edge 48 and is integrated with the laminate 44 by the cured resin. As will be described in further detail later, the strip of foam 60 defines a hand safe edge of the shear web 130, allowing the shear web 130 to be safely handled in use.

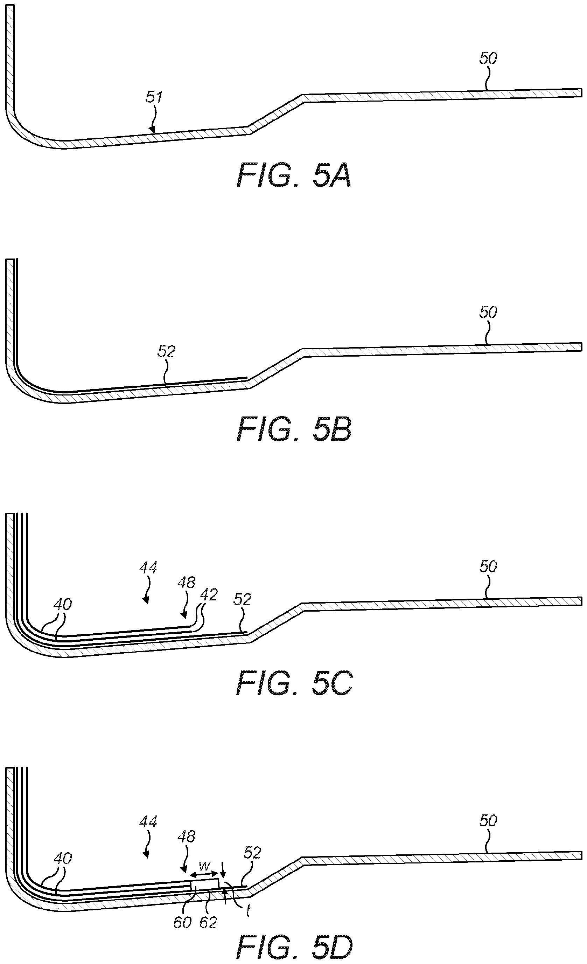

A method of making the shear web 130 will now be described with reference to Figures 5A to 5I.

Referring first to Figure 5A, to make the shear web 130, a mould tool 50 is provided, which has a mould surface 51 corresponding in shape to the outer contour of the shear web 130 to be formed in the mould 50. A release film (not shown) is applied over the surface 51 of the mould tool 50. Next, and as shown in Figure 5B, a first or lower peel ply layer 52 is arranged in the mould 50, over the release film.

As shown in Figure 5C, the laminate layers 40, exemplified here as layers of glass fibre fabric, are laid over the peel ply layer 52. Whilst only glass fibre layers are illustrated in this example, it will be appreciated that the laminate 44 may include other layers or components, for example the shear web 130 may be of sandwich panel construction in which case core material such as foam or balsa may be provided between the fibrous layers 40. The edges 42 of the fibrous layers 40 are aligned in the mould tool 50, and are optionally trimmed once aligned. The edges 42 of the layers 40 define the laminate edge 48.

As shown in Figure 5D, an edging 60 is arranged in the mould 50 alongside the laminate edge 48. The edging 60 is suitably formed from resin-impermeable and preferably compressible material. In this example, the edging 60 is a strip of closed-cell foam made of expanded neoprene or silicone. The closed cells of the foam substantially prevent resin from infusing into the bulk of the edging strip 60 during the subsequent resin infusion process.

The edging 60 has a width *w* of between approximately 5 mm and approximately 10 mm, and a thickness *t* of between approximately 3 mm and approximately 8 mm. The edging 60 is preferably at least as thick as the laminate 44 prior to consolidation of the laminate during the vacuum bagging process. Preferably, the edging 60 is slightly thicker than the laminate 44 prior to consolidation. As will be described later, the compressibility of the edging 40 enables it to be compressed during consolidation in step with the laminate 44 such that it ultimately has the same thickness as the consolidated laminate 44 in the finished component.

Referring still to Figure 5D, an underside 62 of the edging strip 60 is pre-coated with an adhesive layer, and covered with a peelable protective layer (not illustrated). Before the strip 60 is placed on the mould tool 50, the protective layer is removed to expose the adhesive layer. The edging 60 is laid alongside the laminate edge 48 with the underside 62 facing downwardly towards the mould tool 50, such that the edging 60 is fixed to the mould tool 50 via the peel ply layer 52 to keep the edging 60 in place during subsequent processing steps.

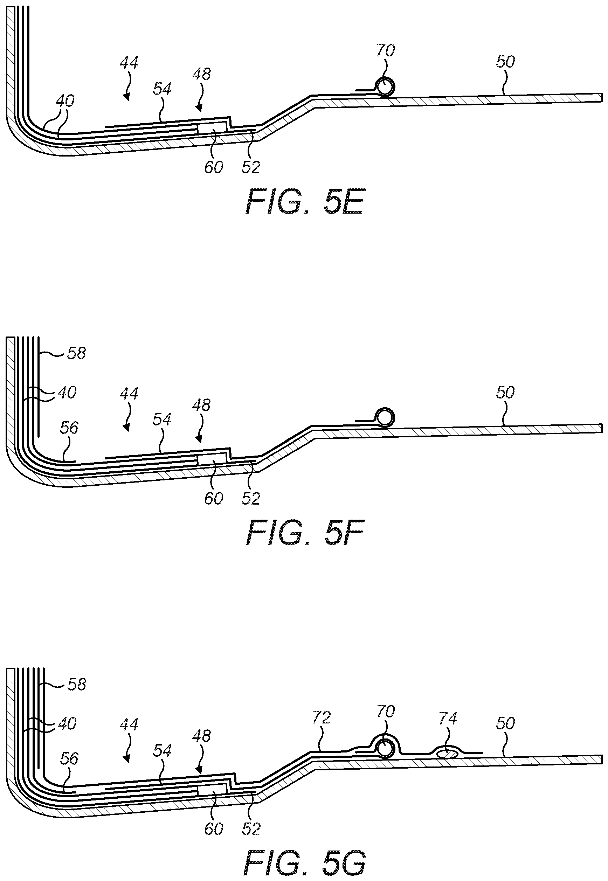

Next, as shown in Figure 5E, a second or upper peel ply layer 54 is laid over the laminate 44 and the edging 60. A vacuum channel 70 is then laid on top of the peel ply layer 54 outboard of the edging 60 and the peel ply layer 54 is folded around the vacuum channel 70. The vacuum channel 70 will later be used to evacuate air from the components in the mould tool 50.

Referring to Figure 5F, once the vacuum channel is in place, a layer of release film 56 is laid over the laminate 44, and a layer of transfer mesh 58, which facilitates resin infusion, is laid over the release film 56.

Referring now to Figure 5G, once all the components have been laid up in the mould tool 50, the components are covered by a vacuum bag 72. The vacuum bag 72 is sealed to the mould tool 50 using butyl rubber sealing tape 74 to create a sealed region around the components.

Air is then evacuated from the sealed region via the vacuum channel 70. As air is evacuated, the pressure differential between the inside and the outside of the vacuum bag 72 causes the vacuum bag to bear against and compress the fibrous layers 40. As mentioned previously, the edging 60 is also compressible under the vacuum pressure, and compresses along with the fibrous layers 40 as air is removed from the sealed region. During this consolidation process, the edging 60 is compressed such that it has a thickness corresponding to the thickness of the compressed laminate 44.

After the required vacuum level has been reached, resin is introduced into the sealed region. The resin infuses into and between the fibrous layers 40, and between the laminate edge 48 and the edging 60. Because the edging 60 is substantially resin impermeable, the resin does not appreciably infuse into the bulk or 'core' of the edging 60. Accordingly, the core of the edging 60 remains substantially resin free.

The resin is then cured by heating. As the resin cures, the edging 60 is integrated with the laminate 44, and is bonded to the laminate 44 along the laminate edge 48.

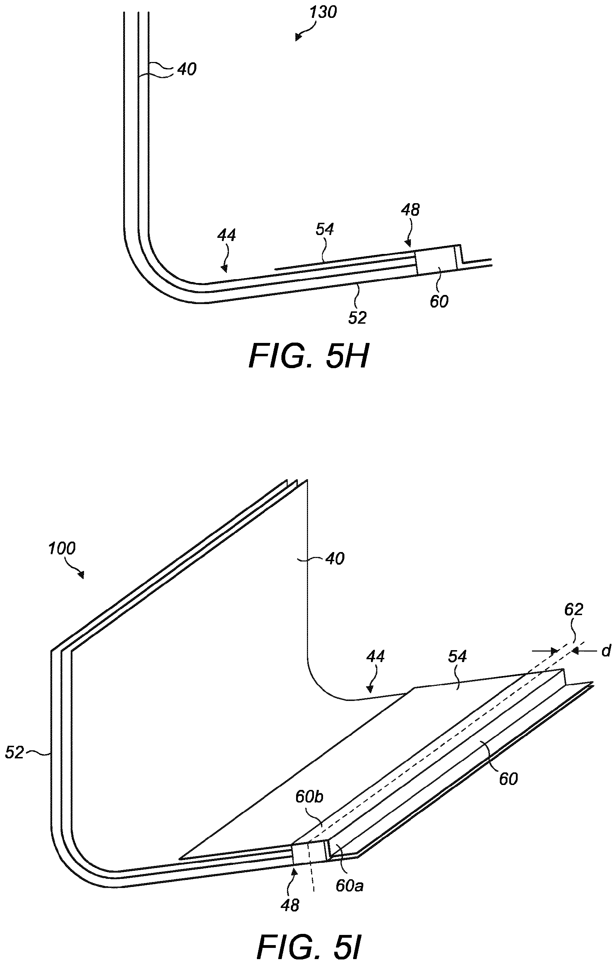

Once the resin has been cured the resulting shear web 130 is demoulded: the vacuum bag 72 is removed, the release film 56 and transfer mesh 58 are peeled away, the shear web 130 is removed from the mould tool 50 and the peel ply layers 52, 54 are trimmed (as shown in Figure 5H).

Referring to Figure 5I, this illustrates the finishing stage of the process. For illustrative purpose, in Figure 5I the full outline of the edging 60 is shown, although it will be appreciated that in reality the upper surface of the edging 60 would be covered by the upper peel ply layer 54, and so would not be visible.

In the finishing stage, the edging 60 is severed along a severance line 62. The severance line 62 is spaced apart from the laminate edge 48 by a distance d, which is between approximately 2 mm and approximately 5 mm. In this way, a sacrificial portion 60a of the edging 60 outboard of the severance line 62 is removed from the component 130, and a shield portion 60b of the edging 60 inboard of the severance line 62 remains integrated with the laminate 44.

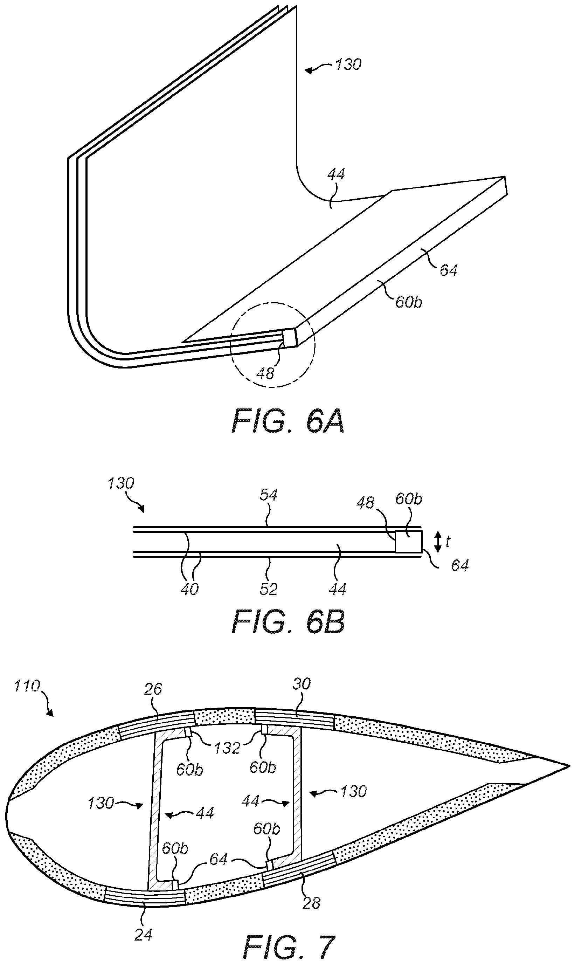

A thin layer of cured resin covers the outside of the edging 60 following the moulding process. However, the impermeable nature of the closed-cell foam means that resin is substantially absent from the bulk/core of the edging 60. Accordingly, when the edging 60 is severed along the severance line 62, a clean (i.e. resin-free) surface 64 (see Fig 6A) of the shield portion 60b is exposed; this surface defines a hand-safe edge 64 of the shear web 130. The substantial absence of hard resin from this edge 64 makes it relatively safe to handle. The absence of resin from the core of the edging 60 also advantageously makes the edging 60 relatively easy to cut. For example it can be cut easily by hand using a knife, which is particularly convenient.

Once the severing process has been completed, there is no need to process the shear web 130 any further to allow for safe handling. This avoids the need for the time-consuming, labour-intensive machining processes that must be employed to finish the edges of composite components made by conventional methods.

Figures 6A and 6B illustrate the finished shear web 130. The shield portion 60b is integrated with the laminate 44 by the cured resin and shields the laminate edge 48 creating a hand-safe edge 64. As shown best in Figure 6B, as a result of the consolidation process, the shield portion 60b is in a compressed state in which its thickness t is substantially equal to the thickness of the consolidated laminate 44.

The peel ply layers 52, 54 extend over both the laminate 44 and the shield portion 60b of the shear web 130. When the shear web 130 is incorporated into a wind turbine blade 110, the peel ply layers 52, 54 are removed to leave a roughened keying surface on both the laminate 44 and the shield portion 60b. Adhesive is applied to this keying surface in order to bond the shear web 130 to the spar caps 24, 26, 28, 30 (see Figure 7), with the roughness of the surface serving to improve the adhesion.

Aside from the handling advantages, the presence of the shield portion 60b does not significantly affect the physical properties of the shear web 130. As most clearly seen in Figure 6B, the shield portion 60b is securely integrated with the laminate 44 by the cured resin, and the fact that the shield portion 60b is provided with peel ply layers 52, 54 in the same way as the laminate 44 means that the surface of the shield portion 60b can be securely adhered to the wind turbine blade 110.

As shown in Figure 7, when the shear web 130 is incorporated into the wind turbine blade 110, the shear web 130 is disposed entirely in the interior of the blade 110. Thus, the edges 64 of the shear webs 130 are not visible. In the finished wind turbine blade 110, the appearance of the edges 64 is therefore unimportant.

Although in the embodiment described the composite component is a shear web, in other embodiments the composite component may be, for example, a bulkhead, flange or platform.

The edging need not be made of a foam material, but may be made of any suitable material, examples of which include fibrous material, honeycomb, rubber, balsa, and polystyrene. The edging need not be adhered to the mould tool by an adhesive layer, but may be fixed in place by any suitable means, or may simply lie on the mould tool without being fixed in place.

Any or all of the peel ply layers, the release film and/or the transfer mesh may be omitted if required. Additional components may also be laid up in the mould before the vacuum bag is arranged in place.

Although in the method described the fibrous layers are dry fibrous layers, and resin is infused into the layers in a resin-infusion process, the fibrous layers may be pre-preg layers that are impregnated with resin before being arranged in the mould tool. In this case, the resin-infusion step may be omitted.

In the example described, the edging is severed by hand using a knife. However, the edging may be severed by any suitable means, for example a saw or laser. In any case, the severing process may be either manual or automated. Although there is no need for subsequent machining after the severing process in order to provide a hand-safe edge, further machining and finishing stages may nonetheless be employed if desired.

In other embodiments, instead of being severed, the edging may be grinded or sanded to reveal a substantially resin-free exposed surface.

Whilst the edging is preferably made from substantially resin impermeable material, in other examples resin may be prevented from permeating into the bulk of the edging in other ways. For example, the edging may be encapsulated within a resin-impermeable film such as a plastics film. In such cases, the bulk of the edging need not necessarily be made from resin-impermeable material.

The present invention is therefore not limited to the exemplary embodiments described above and many other variations or modifications will be apparent to the skilled person without departing from the scope of the present invention as defined in the following claims.

## Claims

1. A method of making a composite component (130) for a wind turbine blade, the composite component (130) having a safety edge (64), and the method comprising:
arranging one or more fibrous layers (40) in a mould (50) such that the layers (40) define a laminate edge (48);
arranging an edging (60) adjacent to the laminate edge (48);
integrating the fibrous layers (40) and the edging (60) by means of resin;
substantially preventing the resin from permeating into the edging (60); and
removing a portion (60a) of the edging (60) to reveal a substantially resin-free exposed surface (64) of the edging (60) that defines a safety edge (64) of the component (130),
**characterised in that**
the step of removing a portion (60a) of the edging (60) comprises:
severing the edging (60) along a severance line (62) spaced apart from the laminate edge (48); and
removing a sacrificial portion (60a) of the edging (60) outboard of the severance line (62) such that a shield portion (60b) of the edging (60) inboard of the severance line (62) remains integrated with the laminate (44) and includes the substantially resin-free exposed surface (64) defining the safety edge (64) of the component (130).

2. The method of Claim 1, wherein the edging (60) is made from substantially resin impermeable material such that the resin is substantially prevented from permeating into the edging (60).

3. The method of Claim 1 or Claim 2, further comprising arranging a plurality of fibrous layers (40), one on top of the other, in the mould (50) to form the laminate (44).

4. The method of any of Claims 1 to 3, comprising removably fixing the edging (60) to the mould (50).

5. The method of any of Claims 1 to 4, comprising arranging a peel ply layer (52) on the mould (50), and arranging the fibrous layers (40) and the edging (60) over the peel ply layer (52).

6. The method of any of Claims 1 to 5, comprising arranging a peel ply layer (54) over the fibrous layers (40) and the edging (60).

7. The method of any of Claims 1 to 6, wherein an initial thickness of the edging (60) is equal to or greater than an initial combined thickness of the fibrous layer(s) (40) and the method further comprises compressing the fibrous layer(s) (40) and the edging (60) during a vacuum-assisted moulding process such that the edging (60) has a final thickness (t) that is substantially the same as a final combined thickness of the fibrous layer(s) (40).

8. The method of any of Claims 1 to 7, further comprising supplying liquid resin to the mould (50) and integrating the fibrous layers (40) and the edging (60) by curing the resin.

9. The method of any preceding claim, wherein the edging (60) comprises foam, balsa and/or polystyrene.

10. The method of Claim 9, wherein the edging (60) is made from a closed-cell foam.

11. The method of any preceding claim, wherein the edging (60) is in the form of a strip.

12. The method of any preceding claim, wherein the edging (60) is made from a compressible material.

13. A shear web (130) made according to the method of any of Claims 1 to 12.

14. A wind turbine blade comprising the shear web (130) of Claim 13.

## Patentansprüche

1. Verfahren zur Herstellung einer Verbundkomponente (130) für ein Windkraftanlagenblatt, wobei die Verbundkomponente (130) eine Sicherheitskante (64) aufweist und das Verfahren umfasst:
Anordnen einer oder mehrerer Faserschichten (40) in einer Form (50), sodass die Schichten (40) eine Laminatkante (48) definieren;
Anordnen einer Einfassung (60) benachbart zu der Laminatkante (48);
Integrieren der Faserschichten (40) und der Einfassung (60) mittels Harz;
im Wesentlichen verhindern, dass das Harz in die Einfassung (60) eindringt; und
Entfernen eines Abschnitts (60a) der Einfassung (60), um eine im Wesentlichen harzfreie freiliegende Oberfläche (64) der Einfassung (60) offenzulegen, die eine Sicherheitskante (64) der Komponente (130) definiert,
**dadurch gekennzeichnet, dass**
der Schritt des Entfernens eines Abschnitts (60a) der Einfassung (60) umfasst:
Abtrennen der Einfassung (60) entlang einer Trennlinie (62), die von der Laminatkante (48) beabstandet ist; und
Entfernen eines Opferabschnitts (60a) der Einfassung (60) außerhalb der Trennlinie (62), sodass ein Schirmabschnitt (60b) der Einfassung (60) innerhalb der Trennlinie (62) mit dem Laminat (44) integriert bleibt und die im Wesentlichen harzfreie freiliegende Oberfläche (64), die eine Sicherheitskante (64) der Komponente (130) definiert, aufweist.

2. Verfahren nach Anspruch 1, wobei die Einfassung (60) aus einem im Wesentlichen harzundurchlässigem Material hergestellt ist, sodass das Harz im Wesentlichen daran gehindert wird, in die Einfassung (60) einzudringen.

3. Verfahren nach Anspruch 1 oder 2, weiter umfassend Anordnen einer Mehrzahl von Faserschichten (40) übereinander in der Form (50), um das Laminat (44) zu bilden.

4. Verfahren nach einem der Ansprüche 1 bis 3, umfassend lösbares Befestigen der Einfassung (60) an der Form (50).

5. Verfahren nach einem der Ansprüche 1 bis 4, umfassend Anordnen einer Abziehschicht (52) auf der Form (50) und Anordnen der Faserschichten (40) und der Einfassung (60) über der Abziehschicht (52).

6. Verfahren nach einem der Ansprüche 1 bis 5, umfassend Anordnen einer Abziehschicht (54) über den Faserschichten (40) und der Einfassung (60).

7. Verfahren nach einem der Ansprüche 1 bis 6, wobei eine Anfangsdicke der Einfassung (60) gleich oder größer als eine kombinierte Anfangsdicke der Faserschicht(en) (40) ist und wobei das Verfahren weiter ein Komprimieren der Faserschicht(en) (40) und der Einfassung (60) während eines vakuumunterstützten Formprozesses umfasst, sodass die Einfassung (60) eine Enddicke (t) aufweist, die im Wesentlichen die gleiche ist, wie eine kombinierte Enddicke der Faserschicht(en) (40).

8. Verfahren nach einem der Ansprüche 1 bis 7, weiter umfassend Zuführen von flüssigem Harz zu der Form (50) und Integrieren der Faserschichten (40) und der Einfassung (60) durch Aushärten des Harzes.

9. Verfahren nach einem vorstehenden Anspruch, wobei die Einfassung (60) Schaumstoff, Balsa und/oder Polystyrol umfasst.

10. Verfahren nach Anspruch 9, wobei die Einfassung (60) aus einem geschlossenzelligen Schaumstoff hergestellt ist.

11. Verfahren nach einem vorstehenden Anspruch, wobei die Einfassung (60) in der Form eines Streifens vorliegt.

12. Verfahren nach einem vorstehenden Anspruch, wobei die Einfassung (60) aus einem komprimierbaren Material hergestellt ist.

13. Steg (130), der gemäß dem Verfahren nach einem der Ansprüche 1 bis 12 hergestellt ist.

14. Windkraftanlagenblatt, umfassend den Steg (130) nach Anspruch 13.

## Revendications

1. Procédé de fabrication d'un composant composite (130) pour une pale d'éolienne, le composant composite (130) présentant une arête de sécurité (64), et le procédé comprenant :
l'agencement d'une ou plusieurs couches fibreuses (40) dans un moule (50) de sorte que les couches (40) définissent une arête stratifiée (48) ;
l'agencement d'une bordure (60) de manière adjacente à l'arête stratifiée (48) ;
l'intégration des couches fibreuses (40) et de la bordure (60) au moyen de la résine ;
l'empêchement sensible de l'imprégnation de la résine dans la bordure (60) ; et
le retrait d'une portion (60a) de la bordure (60) pour révéler une surface exposée sensiblement sans résine (64) de la bordure (60) qui définit une arête de sécurité (64) du composant (130),
**caractérisé en ce que**
l'étape de retrait d'une portion (60a) de la bordure (60) comprend :
le sectionnement de la bordure (60) le long d'une ligne de rupture (62) espacée de l'arête stratifiée (48) ; et
le retrait d'une portion sacrificielle (60a) de la bordure (60) à l'extérieur de la ligne de rupture (62) de sorte qu'une portion de blindage (60b) de la bordure (60) à l'intérieur de la ligne de rupture (62) reste intégrée au stratifié (44) et inclut la surface exposée sensiblement sans résine (64) définissant l'arête de sécurité (64) du composant (130).

2. Procédé selon la revendication 1, dans lequel la bordure (60) est réalisée en matériau sensiblement imperméable à la résine de sorte que la résine soit sensiblement empêchée de s'imprégner dans la bordure (60).

3. Procédé selon la revendication 1 ou la revendication 2, comprenant en outre l'agencement d'une pluralité de couches fibreuses (40), l'une sur le dessus de l'autre, dans le moule (50) pour former le stratifié (44).

4. Procédé selon l'une quelconque des revendications 1 à 3, comprenant la fixation amovible de la bordure (60) au moule (50).

5. Procédé selon l'une quelconque des revendications 1 à 4, comprenant l'agencement d'une couche à nappe de pelage (52) sur le moule (50), et l'agencement de couches fibreuses (40) et de la bordure (60) sur la couche à nappe de pelage (52).

6. Procédé selon l'une quelconque des revendications 1 à 5, comprenant l'agencement d'une couche à nappe de pelage (54) sur les couches fibreuses (40) et la bordure (60).

7. Procédé selon l'une quelconque des revendications 1 à 6, dans lequel une épaisseur initiale de la bordure (60) est égale à ou supérieure à une épaisseur combinée initiale de la/des couche(s) fibreuse(s) (40) et le procédé comprend en outre la compression de la/des couche(s) fibreuse(s) (40) et de la bordure (60) pendant un processus de moulage assisté par le vide de sorte que la bordure (60) présente une épaisseur finale (t) qui est sensiblement la même qu'une épaisseur combinée finale de la/des couche(s) fibreuse(s) (40).

8. Procédé selon l'une quelconque des revendications 1 à 7, comprenant en outre l'alimentation en résine liquide du moule (50) et l'intégration des couches fibreuses (40) et de la bordure (60) par cuisson de la résine.

9. Procédé selon l'une quelconque des revendications précédentes, dans lequel la bordure (60) comprend la mousse, le balsa et/ou le polystyrène.

10. Procédé selon la revendication 9, dans lequel la bordure (60) est réalisée en une mousse à pores fermés.

11. Procédé selon l'une quelconque des revendications précédentes, dans lequel la bordure (60) est sous la forme d'une bande.

12. Procédé selon l'une quelconque des revendications précédentes, dans lequel la bordure (60) est réalisée en un matériau compressible.

13. Traverse de cisaillement (130) fabriquée selon le procédé selon l'une quelconque des revendications 1 à 12.

14. Pale d'éolienne comprenant la traverse de cisaillement (130) selon la revendication 13.
